# EUROPEAN PATENT APPLICATION

(11) **EP 3 467 682 A1**
(43) Date of publication of application: **10.04.2019**
(21) Application number: 18177969.5
(22) Date of filing: 15.06.2018
(51) Int. Cl.: G06F 17/30

(54) **DASHBOARD CREATION AND MANAGEMENT**

(30) Priority: 05.10.2017 GB 201716305
(71) Applicant: Palantir Technologies Inc., Palo Alto, CA 94301 (US)
(72) Inventor: Spencer-Harper, Quentin, Palo Alto, CA California 94301 (US); Rustamli, Turan, Palo Alto, CA California 94301 (US)
(74) Representative: Derry, Paul Stefan

(57) **Abstract**

This relates to systems and methods for creating and managing dashboards. This disclosure describes a method of dashboard creation for a graphical user interface, the method performed by one or more processors and comprising: receiving one or more queries for a data repository, the one or more queries comprising references to one or more datasets in the data repository; loading ontology data relating to the one or more datasets, the ontology data comprising an object graph indicating links between a plurality of datasets in the data repository; retrieving one or more objects from the one or more datasets queried based on the ontology data; and generating one or more panels for display in a user interface in dependence on the retrieved one or more objects and the ontology data relating to the one or more datasets.

## Description

### Field

This relates to systems and methods for creating and managing dashboards. More specifically, the present disclosure relates to systems and methods for creating and managing dashboards that utilise an ontology to facilitate database queries.

### Background

Organisations often provide dashboards to their employees or clients for monitoring data in their systems. The creation of these dashboards requires specialist programming knowledge and techniques (such as SQL, HTML, and JavaScript for example), making them difficult to build and maintain.

### Summary

According to a first aspect, this disclosure describes a method of dashboard creation for a graphical user interface, the method performed by one or more processors and comprising: receiving one or more queries for a data repository, the one or more queries comprising references to one or more datasets in the data repository; loading ontology data relating to the one or more datasets, the ontology data comprising an object graph indicating links between a plurality of datasets in the data repository; retrieving one or more objects from the one or more datasets queried based on the ontology data; and generating one or more panels for display in a user interface in dependence on the retrieved one or more objects and the ontology data relating to the one or more datasets.

The method may further comprise monitoring the one or more datasets to detect one or more updates to the one or more datasets; and updating the one or more panels in dependence on updates detected in the one or more datasets.

The one or more panels may comprise one or more widgets. The one or more widgets may comprise: a list; a set of filters; a graph; and/or a control panel.

The one or more queries may be autocompleted based on the ontology data.

The ontology data used to autocomplete the one or more queries may comprise one or more row titles and/or one or more column titles of the one or more datasets in the data repository.

The method may further comprise providing one or more updates to the one or more datasets through the displayed one or more panels.

The method may further comprise: displaying the updated panels in the user interface; determining whether the one or more updates are compatible with ontology data relating to the one or more datasets; and in the event of a negative determination, reverting the updated panels to a pre-update state.

Generating the one or more panels for display may comprise subscribing the one or more panels to one or more observables, the observables comprising a list of objects in one or more datasets associated with the query.

Updating the one or more panels may comprise: determining that an updated dataset is associated with an observable; identifying one or more subscribing panels to the observable; and regenerating the subscribing panels in dependence on the updated dataset.

The method may further comprise: generating one or more linked panels for display in a user interface, the linked panels displayed in dependence on the generated one or more panels; monitoring the generated one or more panels to detect one or more panel updates; and updating the one or more linked panels in dependence on the detected panel updates.

According to a further aspect, this disclosure describes a system comprising: a database repository comprising one or more datasets; an ontology layer comprising ontology data; a dashboard creation module; and a dashboard interface, wherein the system is configured to perform any of the methods described herein.

According to a further aspect, this disclosure describes a system comprising: a database repository comprising one or more datasets; an ontology layer comprising ontology data; a dashboard creation module; and a dashboard interface, wherein the system is configured to: receive one or more queries for the data repository, the one or more queries comprising references to one or more datasets in the data repository; load ontology data relating to the one or more datasets, the ontology data comprising an object graph indicating links between a plurality of datasets in the data repository; retrieve one or more objects from the one or more datasets queried based on the ontology data; and generate one or more panels for display in a user interface in dependence on the retrieved one or more objects and the ontology data relating to the one or more datasets.

According to a further aspect, this disclosure describes a computer program comprising computer readable code that, when executed by a computing apparatus, causes the computing apparatus to perform any of the methods described herein.

According to a further aspect, this disclosure describes a non-transitory computer readable medium having computer readable code stored thereon, the computer readable code, when executed by at least one processor, causing performance of the steps of: receiving one or more queries for a data repository, the one or more queries comprising references to one or more datasets in the data repository; loading ontology data relating to the one or more datasets, the ontology data comprising an object graph indicating links between a plurality of datasets in the data repository; retrieving one or more objects from the one or more datasets queried based on the ontology data; and generating one or more panels for display in a user interface in dependence on the retrieved one or more objects and the ontology data relating to the one or more datasets

According to a further aspect, this disclosure describes an apparatus comprising one or more processors or special-purpose computing hardware configured to perform any of the methods described herein.

According to a further aspect, this disclosure describes an apparatus comprising: one or more processors; and a memory, the memory comprising instructions that, when executed by one or more processors, cause the apparatus to perform the steps of: receiving one or more queries for a data repository, the one or more queries comprising references to one or more datasets in the data repository; loading ontology data relating to the one or more datasets, the ontology data comprising an object graph indicating links between a plurality of datasets in the data repository; retrieving one or more objects from the one or more datasets queried based on the ontology data; and generating one or more panels for display in a user interface in dependence on the retrieved one or more objects and the ontology data relating to the one or more datasets.

Aspects of the present disclosure may be implemented to realise one or more of the following advantages. Using an object graph when generating dashboards can remove the need to manually insert joins between multiple datasets, speeding up dashboard creation and reducing overall memory requirements. Furthermore, use of the ontology allows updates to the objects underlying dashboards to be efficiently propagated to multiple dashboards that display those objects.

### Brief description of drawings

Example embodiments will now be described by way of non-limiting example with reference to the accompanying drawings, in which:
Figure 1 shows a schematic example of a system for creating and rendering dynamic dashboards;
Figure 2 shows a block diagram of an exemplary computer system;
Figure 3 shows a flow diagram of a method of providing a dashboard to a user through a user interface;
Figure 4 shows a flow chart of a method for initially generating a panel for a dashboard;
Figure 5 shows a flow chart for a method of updating one or more panels; and
Figure 6 example of a dashboard creation graphical user interface.

### Detailed description

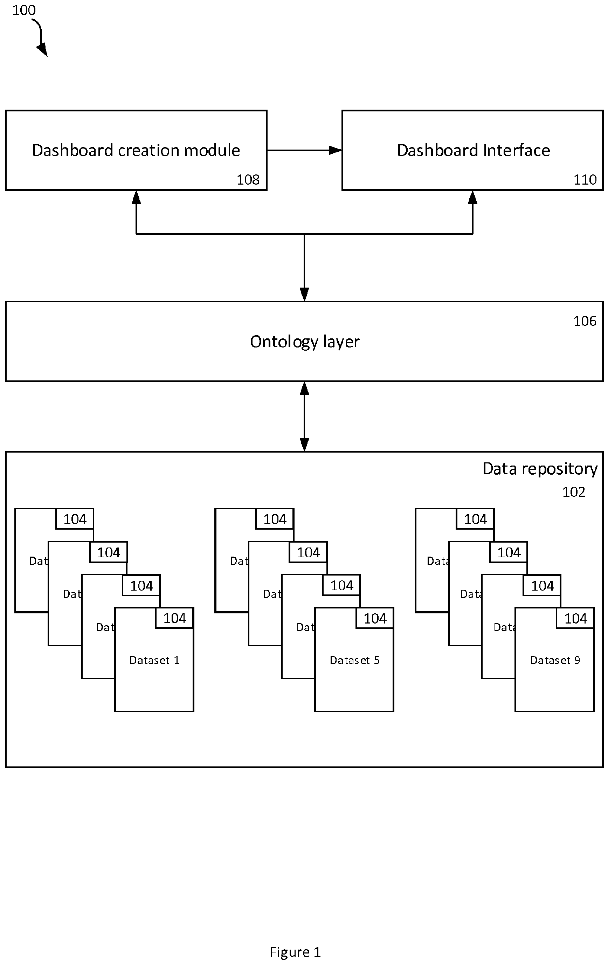

The creation of user dynamic dashboards for interacting with and querying datasets can be simplified by using an ontology defined on those datasets. Figure 1 shows a schematic example of a system for creating and rendering dynamic dashboards.

The system 100 comprises a data repository 102 comprising one or more of datasets 104. The each of the one or more datasets comprises data representing objects. The data repository may contain a plurality of datasets. The datasets may be in a table format, the tables comprising one or more rows and one or more columns of objects. For example, the datasets may comprise one or more tables, with the table rows representing objects and the table columns representing object properties (or vice versa). The datasets may comprise relational databases.

The data repository 102 may be a distributed data repository, with the datasets 104 comprising the data repository 102 being stored at a plurality of locations. One or more of the datasets 104 may be under control of one or more different entities. The datasets 104 may be edited by the entities that control them, for example to update the data in the dataset in light of new measurements and/or surveys.

An object may refer to a thing/a grouping of things with a given set of properties. An object may reference tangible/intangible things and/or animate/inanimate things. As non-limiting examples, an object may refer to persons, vehicles, portions of a vehicle, buildings, portions of buildings, investigations, and a portion of an investigation, schedules, or rights/demands for rights, and/or other things. Other types of objects are contemplated.

A definition of an object may describe the object by specifying/identifying one or more properties (e.g. characteristics) of the object. For example, an object may include a person and a definition of the object may describe the person by specifying/identifying particular properties (e.g. gender, height, weight, education, occupation, address, phone number) of the person. The values of the properties may be stored in one or more columns and/or rows of a database as strings, numbers and/or other forms of expression. The definition of the object may identify the particular columns and/or rows of the database storing the relevant values of the properties of the object. In some embodiments, a given property of an object may be derived from one or more values of datasets. For example, a given property of an object may be determined based on multiple values within one or more tables.

An object may be related to one or more other objects. Relationships among objects may be between objects of the same type (e.g. relationships between people objects, such as between family members, co-workers, persons who have interacted with each other) and/or between objects of different types (e.g. relationships between a person object and a non-person object, such as between a person and a schedule, a person and an investigation). For example, objects representing individual investigations (e.g. of accidents, of claims, of demand for rights) may be related to an object representing a group of investigations (e.g. based on commonalities, based on a user input). Such relationships may effectuate grouping individual investigations into groups of investigations. As another example, objects representing individual investigations may be related to an object representing persons (e.g. persons associated with investigations). Relationships between objects may include one-to-one relationships, one-to-many relationships, many-to-one relationships, many-to-many relationships, and/or other relationships.

The system 100 further comprises an ontology layer 106. The ontology layer 106 provides metadata (herein also referred to as an ontology) for interpreting objects in the data repository. Data defined in the ontology is herein described as "ontological data". The ontology comprises an object graph indicating links between a plurality of datasets 104 in the data repository 102. For example, the ontology may comprise an object graph linking objects in one or more datasets to objects in one or more different datasets.

An ontology may define aspects of objects, such as how properties of an object may be presented and/or modified. For example, an ontology may include a person object type including a name property, and the ontology may define how the name may be presented (e.g. first name followed by last name; last name followed by first name; first name followed by initial). The ontology may define a display prominence of an object. For example, the object may be assigned a "Prominent", "Normal" or "Hidden" display prominence. Prominent objects can be rendered before normal properties when displaying a portion of the properties. Normal objects may be assigned no special prominence in the display order. Hidden objects may not be displayed.

The ontology may define how/whether the name may be modified (e.g. based on user input, based on user account privileges). As another example, a definition of a person may include one or more relationship properties and the ontology may define how/whether the relationships may be presented and/or modified. In some embodiments, an ontology may define whether/how properties of an object may be created and/or removed. For example, an ontology may define whether a user may add or remove one or more properties of the person object type. The definitions/ontologies may be created based on user input. The definitions/ontologies may be modified (e.g. based on user input, based on system changes).

The ontology may define how a plurality of the datasets 104 in the data repository 102 is related. For example, the ontology may define joins between datasets 104 in the data repository 102. Joins may comprise links between the data to allow for multiple datasets to be navigated and/or searched as if they were a single dataset.

Ontologies may be defined automatically by the ontology layer 106. Ontological data may be prepopulated based on properties of the one or more datasets 104 in the data repository 102. For example, the ontology layer 106 may scan across one or more of the datasets 104 to determine/predict any relationships between objects in the dataset and/or a display prominence for one or more objects in the datasets 104. For example, the fraction of column/row values in a column/row that contain a unique value can be used as an indication of the importance of that column/row. The importance of the column/row can be used to determine a display prominence for objects in that column/row. In a further example, the cardinalities of a column/row can be used to determine the possible display mode for displaying data in that column/row (e.g. which graph types the data can be displayed as). Alternatively, the ontology may be defined manually by a user.

The ontology layer is stored on one or more servers in the system. It stores key values of object types, for example the definitions of object types. The ontology layer can be stored in the JavaScript Object Notation (JSON) format. Object types and/or object have an identifier, properties and metadata associated with them. Data in datasets in the data repository are tied to their respective object types. The ontological data is tied to its backing dataset by primary dataset RIDs.

In some embodiments, the ontology layer comprises one or more global properties. Global properties indicate objects/object types/object properties that are common throughout the ecosystem of datasets. The global properties allow for metadata in the ontology layer to be associated with a plurality of objects/object types/object properties in the datasets without the need to explicitly associate the objects/object types/object properties with that metadata. This can reduce the amount of memory required to store the datasets and the associated metadata. It can further allow for aggregation across datasets/tables with the same global property. Global properties can also be used to reference and/or identify datasets.

The global property may define a particular format or particular formats of data that will be associated with a set of metadata. For example, a global property "telephone number" can be set up that defines one or more data formats that telephone numbers can be provided in (for example, as a continuous sequence of numbers, a sequence of numbers with spaces at particular points, and/or a sequence of numbers with a subset of the numbers enclosed in brackets). Data falling within the definition will then be associated with the global property "telephone number", as well as the metadata associated with global property "telephone number".

The system 100 further comprises a dashboard creation module 108. The dashboard creation module 108 can be used to create dashboards for monitoring objects in datasets 104 in the data repository 102.

A dashboard comprises one or more panels (also referred to herein as widgets) that allow a user to interact with objects in the datasets 104 stored in the data repository 102. The panel is configured to cause the generation of "observables" from one or more of the datasets in the data repository. These observables may comprise links to data in the datasets that a panel can subscribe to and/or transformations on data. One or more panels of the dashboard may be linked to one or more other panels in the dashboard to process data. For example, the objects output by one panel of the dashboard can be used as the input for another panel of the dashboard. In this way, multiple transformations can be linked together, while also displaying an output observable at one or more steps within the chain of transformations. Furthermore, linking panels allows linked panels to be updated when their "parent" panel is updated by providing a listener on the parent panel to determine when it has been updated, and therefore when to regenerate the "child" panel.

Panels may comprise charts, controls, graphs and/or maps, among other things. Examples of chart panels include bar charts, line charts, pie charts, and/or scatter graphs. Examples of control panels may include a date picker, dropdown control, button (e.g. export button, query button etc.), input box, multi-select box, slider, text area and/or timeline. Other examples of panels may include a card, image, link, list, text, graph and/or map panels.

Panels can be configured using the dashboard creation module 108. The dashboard creation module can provide a graphical user interface (GUI) through which a user can configure the one or more panels. Configuration of the one or panels can comprise defining one or more queries for the data repository 102, the queries referencing one or more datasets 104 in the data repository 102. The panel configuration may comprise defining one or more transformations on the results of one or more queries of the database repository 102. These transformations may be defined within the same panel as the query and/or in a different, linked panel. In this way, multiple panels can be populated based on the result of a single query, reducing the number of times the data repository is accessed when generating the dashboard.

Configuring a panel through the dashboard with a query creates a link between the dashboard panel and the datasets that are used to respond to the query. The link may be stored in the ontology layer, for example as a list of dashboard panels that are linked to a particular dataset. This link allows for panels to be updated in dependence on updates to the underlying datasets or their associated ontology.

The dashboard creation module can use the ontological layer 106 to navigate the datasets 104 in the data repository 102. The ontology layer 106 also can also be used by the dashboard creation module 108 to determine how to display objects stored in the datasets 104 on the dashboard. Where the configuration of a panel comprises one or more queries for a data repository that reference one or more datasets, parts of the ontology relating to the referenced datasets are loaded to/accessed by the dashboard creation module.

The ontology defined on the datasets 102 can, in some examples, be used to implement an autocomplete and/or suggestion feature within the dashboard creation module 108 GUI. For example, as the user configures a panel within the GUI, the GUI may update to display additional configuration options in dependence on the ontology relating to the one or more datasets that the panel is querying. In another example, a panel query can be autocompleted based on the ontology data, such as column names in the dataset or datasets that relate to the query.

The system further comprises a dashboard interface 110. Dashboards created using the dashboard creation module 108 are output to the dashboard interface for provision to one or more users via a graphical user interface (GUI). In some embodiments, the dashboard interface 110 and the dashboard creation module are part of the same module/engine in the system.

Upon accessing a dashboard through the dashboard interface, the dashboard panels are loaded and displayed to the user. Ontology data in the ontology layer is used by the dashboard interface to access and retrieve data from one or more datasets relating to panel queries in the dashboard.

The dashboard interface uses the retrieved data and the ontology to generate one or more panels for display to a user through a user interface, as defined in the panel configuration created using the dashboard creation module.

During configuration of the dashboard panels, relationships between dashboard panels and the underlying datasets are created. These relationships can be stored in the ontology later. For example, a list of dashboard panels associated with a particular dataset (or particular global property) can be stored in the ontology layer. The ontology layer monitors the datasets in the data repository for updates to the datasets. Upon detection of an update to a dataset associated with dashboard panels, the system pushes the update to the dashboard interface. The dashboard interface regenerates the panel or panels referencing the updated data in dependence on the updates pushed to it, thereby dynamically updating the panels. The ontology layer can also monitor the ontology data for updates, for example to global property definition or object view defaults, and push those updates to the panels associated with that part of the ontology data. The panel effectively subscribes to an observable/service that updates the panel whenever the observable changes. This can, for example, be achieved using Reactive Streams JavaScript (RSJS) or Operational Transforms (OT).

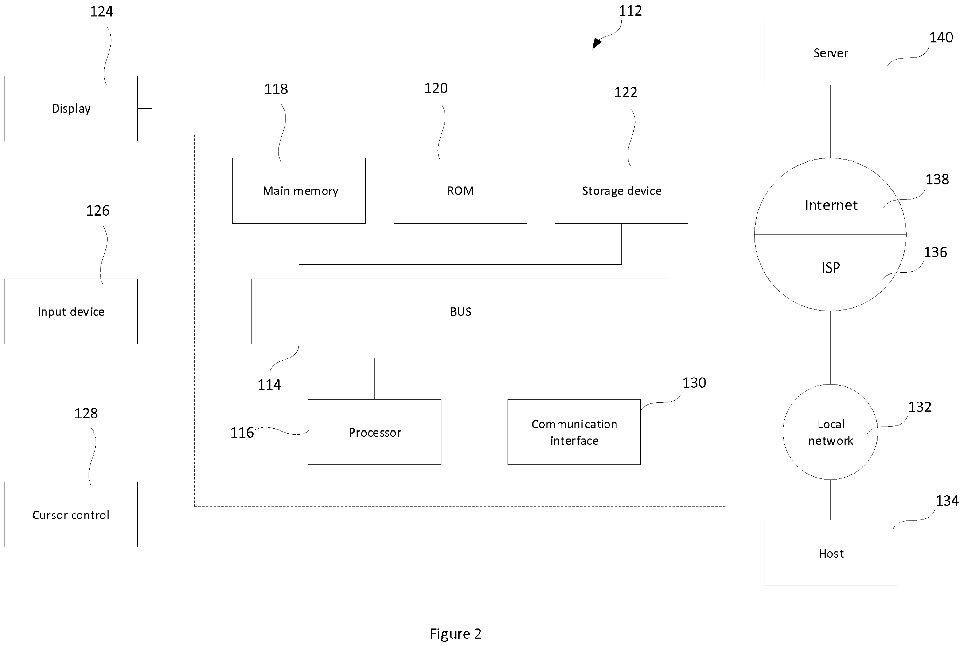

Referring to Figure 2, a block diagram of an exemplary computer system, which may comprise the data repository, the client device, the dashboard creation module, the dashboard interface and/or the ontology layer, consistent with examples of the present specification is shown.

Computer system 112 includes a bus 114 or other communication mechanism for communicating information, and a hardware processor 116 coupled with bus for processing information. Hardware processor 116 can be, for example, a general purpose microprocessor. Hardware processor 116 comprises electrical circuitry.

Computer system 112 includes a main memory 118, such as a random access memory (RAM) or other dynamic storage device, which is coupled to the bus for storing information and instructions to be executed by processor. The main memory 118 can also be used for storing temporary variables or other intermediate information during execution of instructions by the processor 116. Such instructions, when stored in non-transitory storage media accessible to the processor, render the computer system 112 into a special-purpose machine that is customized to perform the operations specified in the instructions. The main memory 118 may be referred to as volatile memory.

Computer system 112 further includes a read only memory (ROM) 120 or other static storage device 122 coupled to the bus for storing static information and instructions for the processor1. A storage device 122, such as a magnetic disk or optical disk, is provided and coupled to the bus for storing information and instructions.

Computer system 112 can be coupled via the bus to a display 124, such as a cathode ray tube (CRT), liquid crystal display, or touch screen, for displaying information to a user. An input device 126, including alphanumeric and other keys, is coupled to the bus 114 for communicating information and command selections to the processor 116. Another type of user input device 126 is cursor control 128, for example using a mouse, a trackball, or cursor direction keys for communicating direction information and command selections to the processor and for controlling cursor movement on the display. The input device 126 typically has two degrees of freedom in two axes, a first axis (for example, x) and a second axis (for example, y), that allows the device to specify positions in a plane.

Computer system 112 can implement the techniques described herein using customized hard-wired logic, one or more ASICs or FPGAs, firmware and/or program logic which in combination with the computer system causes or programs computer system to be a special-purpose machine. According to some embodiments, the operations, functionalities, and techniques disclosed herein are performed by computer system in response to the processor executing one or more sequences of one or more instructions contained in the main memory. Such instructions can be read into the main memory from another storage medium, such as storage device. Execution of the sequences of instructions contained in main memory causes the processor to perform the process steps described herein. In alternative embodiments, hard-wired circuitry can be used in place of or in combination with software instructions.

The term "storage media" as used herein refers to any non-transitory media that stores data and/or instructions that cause a machine to operate in a specific fashion. Such storage media can comprise non-volatile media and/or volatile media. Non-volatile media includes, for example, optical or magnetic disks, such as storage device. Volatile media includes dynamic memory, such as main memory 118. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from, but can be used in conjunction with, transmission media. Transmission media participates in transferring information between storage media. For example, transmission media includes coaxial cables, copper wire and fibre optics, including the wires that comprise bus. Transmission media can also take the form of acoustic or light waves, such as those generated during radio-wave and infra-red data communications.

Various forms of media can be involved in carrying one or more sequences of one or more instructions to processor for execution. For example, the instructions can initially be carried on a magnetic disk or solid state drive of a remote computer. The remote computer can load the instructions into its dynamic memory and send the instructions over a telephone line or other transmission medium using a modem. A modem local to computer system can receive the data on the telephone line or other transmission medium and use an infra-red transmitter to convert the data to an infra-red signal. An infra-red detector can receive the data carried in the infra-red signal and appropriate circuitry can place the data on bus. Bus carries the data to the main memory, from which the processor retrieves and executes the instructions. The instructions received by the main memory can optionally be stored on the storage device either before or after execution by the processor.

Computer system also includes a communication interface 130 coupled to the bus 114. The communication interface provides a two-way data communication coupling to a network link that is connected to a local network 132. For example, the communication interface can be an integrated services digital network (ISDN) card, cable modem, satellite modem, or a modem to provide a data communication connection to a corresponding type of telephone line. As another example, the communication interface 1330 can be a local area network (LAN) card to provide a data communication connection to a compatible LAN. Wireless links can also be implemented. In any such implementation, the communication interface 130 sends and receives electrical, electromagnetic or optical signals that carry digital data streams representing various types of information.

The network link typically provides data communication through one or more networks to other data devices. For example, the network link can provide a connection through the local network 132 to a host computer 134 or to data equipment operated by an Internet Service Provider (ISP) 136. The ISP 136 in turn provides data communication services through the world wide packet data communication network now commonly referred to as the "Internet" 8. The local network 132 and internet 138 both use electrical, electromagnetic or optical signals that carry digital data streams. The signals through the various networks and the signals on the network link and through the communication interface, which carry the digital data to and from the computer system, are example forms of transmission media.

The computer system can send messages and receive data, including program code, through the network(s), network link and communication interface. For example, a first application server may transmit data through the local network to a different application server 140.

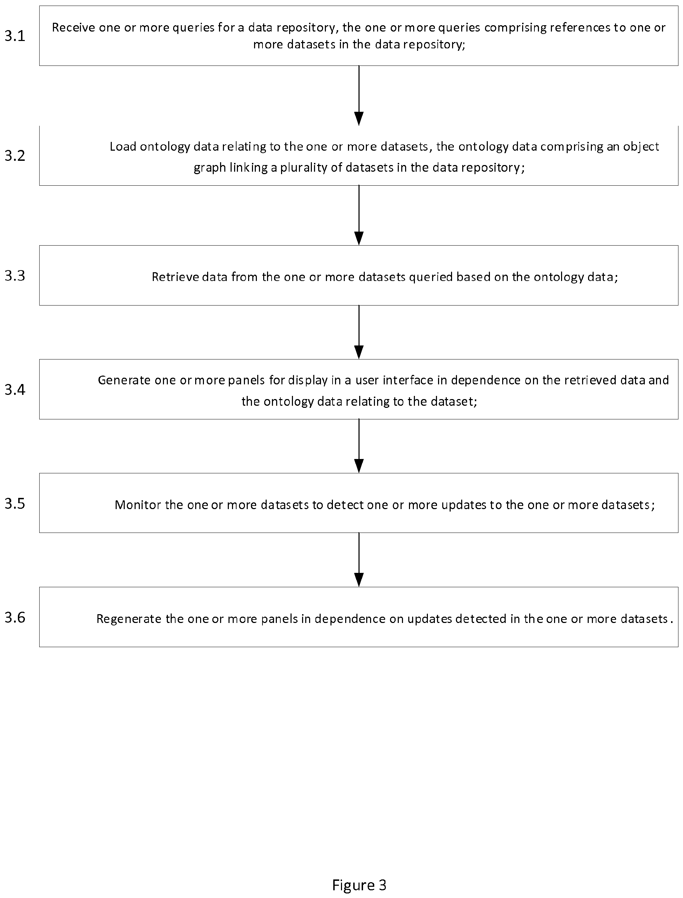

Figure 3 shows a flow diagram of a method of providing a dashboard to a user through a user interface. The method can be performed by a system such as the system described in relation to Figure 1.

At operation 3.1 one or more queries for the data repository 102 are received, the queries comprising references to one or more datasets in the data repository. The queries can originate from a panel configured through the dashboard creation module. This can be, for example, during the dashboard creation process as the query is entered. Alternatively, the query can be received from the dashboard interface, either from a pre-configured panel that has been loaded, or as a user input through the dashboard.

The query may comprise a request to load one or more objects from the requested datasets. The query may alternatively or additionally comprise a search request over the one or more referenced datasets.

The references to the one or more datasets may comprise one or more identifiers identifying the datasets on which the query is to be performed. In some embodiments, these identifiers are in the form of links. The reference may alternatively or additionally comprise a reference to a global property that is defined on those datasets, and which thereby identifies the datasets for the query to be performed on.

At operation 3.2 ontology data relating to the one or more datasets is loaded. The ontology data comprises an object graph indicating links between a plurality of datasets in the data repository. The links can, for example, be links between objects in the datasets and/or joins between datasets.

At operation 3.3 data is retrieved from the one or more datasets queried based on the ontology data. The query can provide a start point for navigating the object graph of the ontology to retrieve referenced objects from the datasets. For example, the query may reference one or more objects by defining an initial dataset relating to the object along with navigation information indicating how to navigate across joins from the initial dataset to a further dataset containing one or more of the objects.

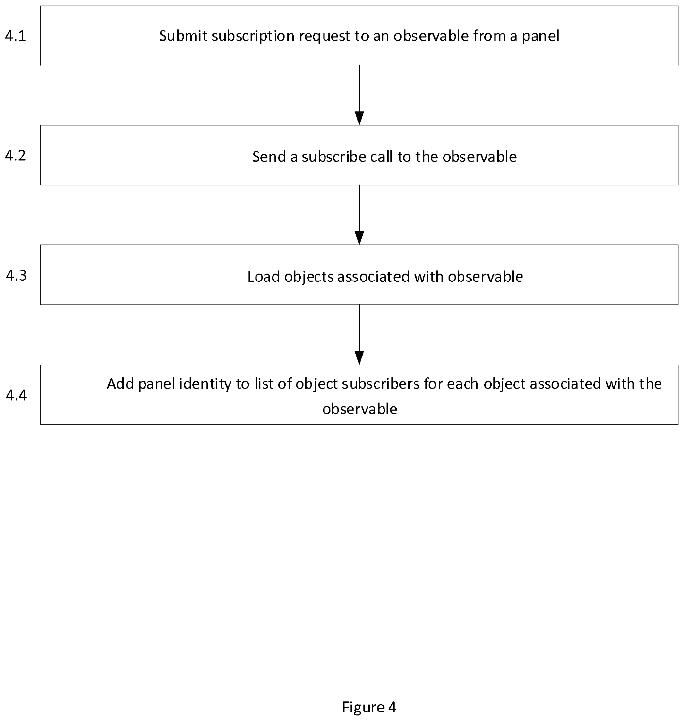

At operation 3.4 one or more panels for display in a user interface are generated in dependence on the retrieved data and the ontology data relating to the dataset. The ontology defines how the objects retrieved from the datasets can be displayed. The query may further define which of the permissible display types are to be used in the panel. Generation of the panel comprises subscribing the panel to one or more observables relating to the query used to generate the panel, as described in further detail below in relation to Figure 4.

At operation 3.5 the one or more datasets are monitored to detect one or more updates to the one or more datasets. In some embodiments, the ontology layer is also monitored for updates to the ontology metadata.

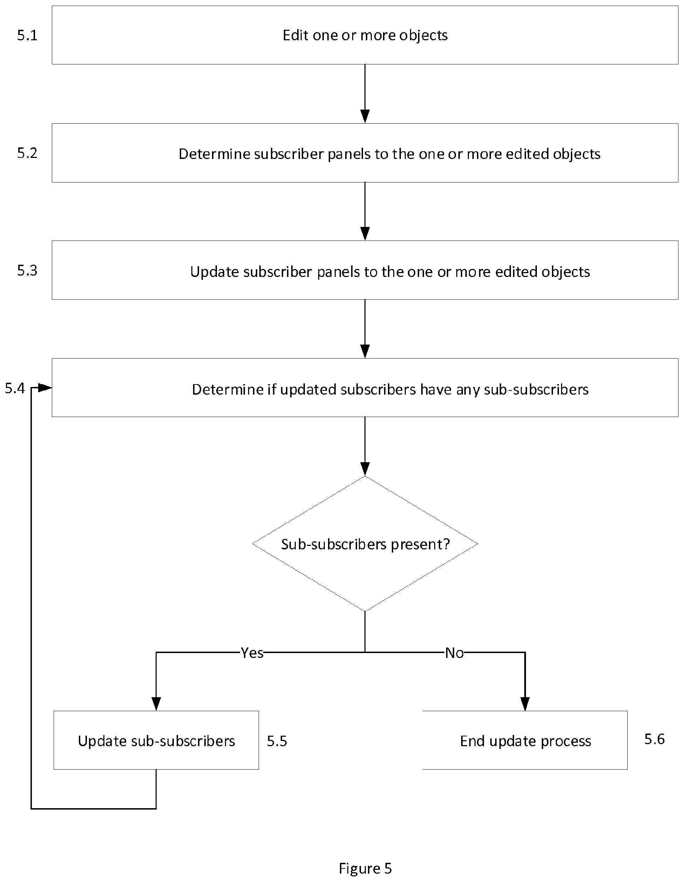

At operation 3.6 the one or more panels are regenerated in dependence on updates detected in the one or more datasets. The method of monitoring and updating the datasets is described in more detail in relation to Figure 5 below.

Figure 4 shows a flow chart of a method for initially generating a panel for a dashboard. When the panel is generated by the dashboard creation module, a subscription request is submitted to an observable from the panel (operation 4.1) indicating the objects in the datasets that the panel wishes to subscribe to. The panel may subscribe to the results of queries that define the panel. For example, if the panel defined by a search request, then the panel can subscribe to the results of that search request, so that when the datasets the search is run over are updated the panel can be regenerated/updated accordingly.

At operation 4.2, a subscribe request is sent to the observable. The observable may comprise an indication of one or more objects in the datasets stored in the data repository, for example links to that data. If the observable to which the subscription request has not yet been created, then the observable is created and stored by the system, for example in the ontology layer or in a central object store.

At operation 4.3, objects associated with the observable are loaded. The loaded objects are used to generate the panel. The objects are loaded from datasets in the data repository. The ontology data is used to determine how to load the objects and/or how the objects can be displayed.

At operation 4.4, the panel identity is added to a list of object subscribers for each object associated with the observable. The list of objects that comprises an observable can be stored in the ontology layer and or in a central object store. Each object is associated with a list of subscriber panels. The list may be in the form of call-backs. It will be appreciated that operation 4.5 and operation 4.4 can be performed in parallel, or with their orders reversed (i.e. operation 4.5 before operation 4.4).

Figure 5 shows a flow chart for a method of updating one or more panels. At operation 5.1, one or more objects in the datasets backing the dashboard are edited. The edit can comprise editing the object data in the dataset and/or editing the ontology associated with the object. The edit can, for example, be performed by a dashboard user through the dashboard widget/panel configured to allow data edits. The edits can also be performed directly on the datasets, for example when a dataset is replaced with a new version.

At operation 5.2, the system determines the identities of subscribers to the one or more edited objects. The identities of subscribing panels in dashboards that are associated with an object are stored in an object list. The list may form part of the ontology layer and/or be stored in a separate central object store. The list may comprise one or more call-backs to the associated dashboard panels.

At operation 5.3, the dataset updates are used to update the subscribers to the updated objects. The updated data is sent from the data repository to the dashboard interface. The one or more panels subscribing to the object are then regenerated using the updated object data. The regeneration can be guided by ontology data from the ontology layer. For example, the ontology data may indicate that how the updated object is to be displayed.

In some embodiments, an object cache is used to manage updates of the objects in the dashboard interface. The object may be stored in an object cache such that information associated with the object is stored in the cache. For example, the object may be associated with sets of object data in the object store, which are loaded into the object cache to enable operations to be performed on the object data by a user of the dashboard interface without the user having to access the whole object store. Changes to the object definition within the object store (such as changes to the ontology) may be identified, and object data in the object cache updated based upon those changes. A user may edit/update the object data within the cache. These edits/updates to the object data in the cache can be saved to the underlying object in the object store. The edits/updates to the object data being saved to the object store can trigger the updates to the subscribers of the objects.

At operation 5.4, it is determined if the subscribers to the updated object have sub-subscribers. Sub-subscribers can comprise dashboard panels that take as input the output of the panel subscribed to the updated object. The sub-subscriber panels can be identified by a "listener" provided on the dashboard panel to which the sub-subscribers subscribe.

If sub-subscribers are determined to present, then the sub-subscriber panels in the dashboard are updated at operation 5.5. The sub-subscriber panels are regenerated using the output from the updated panel to which they subscribe. The regeneration can be guided by ontology data from the ontology layer. For example, the ontology data may indicate that how the updated object is to be displayed.

In some examples, sub-subscriber panels may have additional dashboard panels that subscribe to them. When the sub-subscriber panels are regenerated, the system checks if there are any such panels. If they are determined to be present, the additional panels are then regenerated using the output of the sub-subscriber panels. This process can be repeated for any further panels that subscribe to the additional panels, and so on, thus propagating updates throughout a dashboard.

If no sub-subscriber panels are determined to be present at any of the iterations of the method, then the dashboard panel update process ends.

In some embodiments, updates to one or more dashboard panels can be made through the dashboard interface while the dashboard is being displayed. These updates may comprise updates to data and/or updates to panel configuration settings. The updates can be applied to the dashboard in the dashboard interface as they are made. The updates are also sent to the backend (for example the data repository or the ontology layer) where they are applied to the datasets and/or the ontology data. The backend determines if the updates are compatible with the dataset and/or the ontology. If the updates are compatible, they are applied to the datasets and/or ontology. If the updates are not compatible, the backend sends a message to the dashboard interface to revert the dashboard to its original (pre-update) configuration. This "optimistic update" process allows for compatible updates to be displayed to the user through the dashboard interface faster than if the dashboard interface had waited for confirmation from the backend.

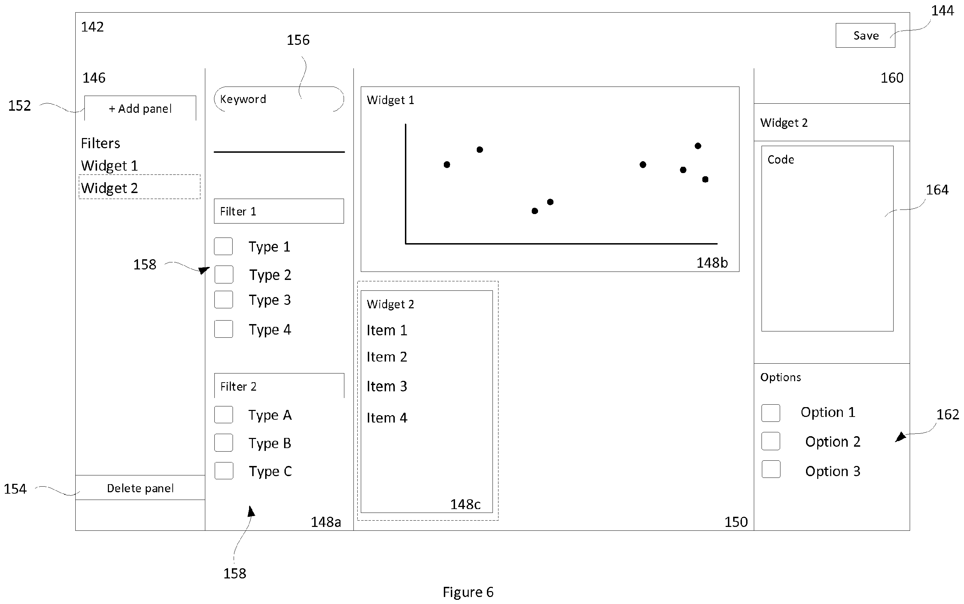

Figure 6 example of a dashboard creation graphical user interface (GUI). The GUI can be used to create and/or modify dashboards. The GUI comprises a main toolbar. The graphical user interface (GUI) comprises a main toolbar 142. The main toolbar 142 comprises a save icon 144 for saving the ontology data created by the user using the interface. The main toolbar 1420 may further comprise one or more navigation tabs (not shown) through which the user can navigate the GUI.

The GUI further comprises a widget management toolbar 146. The panel management toolbar 146 allows a user to add and remove one or more panels 148 to a dashboard window 150. The panel management toolbar 146 comprises an "Add panel" icon 152 for adding a panel to the dashboard window 150. When selected by a user, the add panel icon 152 displays a list of panels 148 that can be added to the dashboard window 150. For example, a drop-down list can be provided. The panel management toolbar further comprises a list of panels that are currently displayed in the dashboard window 150. In the example shown, there are three panels 148 in the dashboard window 150: a filter panel; a graph widget; and a list widget. Panels in the list can be selected, leading to the selected panel being highlighted in the dashboard window. The panel management toolbar 146 further comprises a delete panel icon 154 for removing panels 148 from the dashboard window 150.

When a panel 148 (e.g., panel 148a, 148b, and/or 148c) is added to the dashboard window 150, code may be automatically generated based on the panel type and/or ontology data associated with the objects in the data repository to which the panel 148 is linked. The code may, for example, be a query relating to one or more datasets in the data repository. Example code formats include HTML and JSON.

The dashboard window 150 comprises one or more panels 148 that have been added to the dashboard window 150. The panels 150 can be moved within the dashboard window 150 using a "drag-and-drop" method. The panels 148 can be resized and rearranged.

Examples of a panel that can be added to the dashboard window include a filter panel 148a. The filter panel 148a allows datasets to be searched over using a search bar 156. One or more object filters 158 can be provided in the filter panel 148a. The user can select which object filters 158 appear in the panel from a list of allowed filters determined from the ontology data. Filters can, for example, restrict the search to certain object types and/or global properties.

Another example of a panel that can be added to the dashboard window 150 is a graph panel 148b. A graph panel 148b displays one or more graphs that are linked to a query. For example, a graph may display the results of a data search and/or a data request. The graph can, for example, be any of: a line graph; a scatter graph; a bar graph; a pie chart; and/or a histogram. Other examples are possible.

Another example of a panel that can be added to the dashboard window 150 is a list panel 148c. A list panel 148c displays one or more lists of objects. The lists can comprise one or more object properties associated with each object in the list.

Other examples of panels that can be added to the dashboard window 150 can include control panels such as a date picker, dropdown control, button (e.g. export button, query button etc.), input box, multi-select box, slider, text area and/or timeline for example. Other examples of panels may include a card, image, link, text, and/or map panels.

The GUI further comprises a panel configuration toolbar 160. The panel configuration toolbar 160 allows properties of a selected panel (in this example the list panel 148c) to be configured. A list of panel configuration options 162 is provided based on the panel type and/or the ontology data associated with the objects in the data repository that the panel 148 is linked with. The user can select options from the list to configure a selected panel 148. Selecting options in the list can automatically edit the code associated with the panel 148 in order to implement the selected options in the panel.

The panel configuration toolbar further comprises a code window 164 displaying the code that generates the panel. The code can be edited directly by a user familiar with the coding language used to define the panel.

Methods described in the illustrative embodiments may be implemented as program modules or functional processes including routines, programs, objects, components, data structures, etc., that perform particular tasks or implement particular functionality, and may be implemented using existing hardware. Such existing hardware may include one or more processors (e.g. one or more central processing units), digital signal processors (DSPs), application-specific-integrated-circuits, field programmable gate arrays (FPGAs), computers, or the like.

Unless specifically stated otherwise, or as is apparent from the discussion, terms such as processing or computing or calculating or determining or the like, refer to the actions and processes of a computer system, or similar electronic computing device. Note also that software implemented aspects of the example embodiments may be encoded on some form of non-transitory program storage medium or implemented over some type of transmission medium. The program storage medium may be magnetic (e.g. a floppy disk or a hard drive) or optical (e.g. a compact disk read only memory, or CD ROM), and may be read only or random access. Similarly the transmission medium may be twisted wire pair, coaxial cable, optical fibre, or other suitable transmission medium known in the art. The example embodiments are not limited by these aspects in any given implementation.

It will be appreciated that many modifications may be made to the embodiments hereinbefore described. Such modifications may involve equivalent and other features which are already known in automated monitoring and control of machinery, and which may be used instead of or in addition to features already described herein. Features of one embodiment may be replaced or supplemented by features of another embodiment.

In the above detailed description, numerous specific details are set forth in order to provide a thorough understanding of the various described implementations. However, it will be apparent to one of ordinary skill in the art that the various described implementations may be practiced without these specific details. In other instances, well-known methods, procedures, components, circuits, and networks have not been described in detail so as not to unnecessarily obscure aspects of the implementations.

It will also be understood that, although the terms first, second, etc. are, in some instances, used herein to describe various elements, these elements should not be limited by these terms. These terms are only used to distinguish one element from another. For example, a first user interface could be termed a second user interface, and, similarly, a second user interface could be termed a first user interface, without departing from the scope of the various described implementations. The first user interface and the second user interface are both types of user interfaces, but they are not the same user interface.

The terminology used in the description of the various described implementations herein is for the purpose of describing particular implementations only and is not intended to be limiting. As used in the description of the various described implementations and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

Although claims have been formulated in this application to particular combinations of features, it should be understood that the scope of the disclosure of the present disclosure also includes any novel features or any novel combination of features disclosed herein either explicitly or implicitly or any generalization thereof, whether or not it relates to the same disclosure as presently claimed in any claim and whether or not it mitigates any or all of the same technical problems as does the present disclosure.

## Claims

1. A method of dashboard creation for a graphical user interface, the method performed by one or more processors and comprising:
receiving one or more queries for a data repository, the one or more queries comprising references to one or more datasets in the data repository;
loading ontology data relating to the one or more datasets, the ontology data comprising an object graph indicating links between a plurality of datasets in the data repository;
retrieving one or more objects from the one or more datasets queried based on the ontology data; and
generating one or more panels for display in a user interface in dependence on the retrieved one or more objects and the ontology data relating to the one or more datasets.

2. The method of claim 1, further comprising monitoring the one or more datasets to detect one or more updates to the one or more datasets; and
updating the one or more panels in dependence on updates detected in the one or more datasets.

3. The method of claim 1 or 2, wherein the one or more panels comprise one or more widgets.

4. The method of claim 3, wherein the one or more widgets comprise: a list; a set of filters; a graph; and/or a control panel.

5. The method of any preceding claim, wherein the one or more queries are autocompleted based on the ontology data.

6. The method of claim 5, wherein the ontology data used to autocomplete the one or more queries comprises one or more row titles and/or one or more column titles of the one or more datasets in the data repository.

7. The method of any preceding claim, further comprising providing one or more updates to the one or more datasets through the displayed one or more panels.

8. The method of claim 7, further comprising:
displaying the updated panels in the user interface;
determining whether the one or more updates are compatible with ontology data relating to the one or more datasets; and
in the event of a negative determination, reverting the updated panels to a pre-update state.

9. The method of any preceding claim, wherein generating the one or more panels for display comprises subscribing the one or more panels to one or more observables, the observables comprising a list of objects in one or more datasets associated with the query.

10. The method of claim 9, wherein updating the one or more panels comprises:
determining that an updated dataset is associated with an observable;
identifying one or more subscribing panels to the observable; and
regenerating the subscribing panels in dependence on the updated dataset.

11. The method of any preceding claim, further comprising:
generating one or more linked panels for display in a user interface, the linked panels displayed in dependence on the generated one or more panels;
monitoring the generated one or more panels to detect one or more panel updates; and
updating the one or more linked panels in dependence on the detected panel updates.

12. A system comprising:
a database repository comprising one or more datasets;
an ontology layer comprising ontology data;
a dashboard creation module; and
a dashboard interface,
wherein the system is configured to perform the method of any preceding claim.

13. A system comprising:
a database repository comprising one or more datasets;
an ontology layer comprising ontology data;
a dashboard creation module; and
a dashboard interface,
wherein the system is configured to:
receive one or more queries for the data repository, the one or more queries comprising references to one or more datasets in the data repository;
load ontology data relating to the one or more datasets, the ontology data comprising an object graph indicating links between a plurality of datasets in the data repository;
retrieve one or more objects from the one or more datasets queried based on the ontology data; and
generate one or more panels for display in a user interface in dependence on the retrieved one or more objects and the ontology data relating to the one or more datasets.

14. A computer program comprising computer readable code that, when executed by a computing apparatus, causes the computing apparatus to perform the method of any of claim 1-11.

15. An apparatus comprising one or more processors or special-purpose computing hardware configured to perform the method of any of claims 1-11.
